Europäisches Patentamt

(19) European Patent Office    (11) Veröffentlichungsnummer: **0 103 254**

Office européen des brevets    **B1**

(12) **EUROPÄISCHE PATENTSCHRIFT**

(45) Veröffentlichungstag der Patentschrift:    (51) Int. Cl.⁴: **C 08 F 220/04,** C 08 F 222/02,
16.12.87                                         C 08 F 2/06, C 11 D 3/37,
                                                 C 02 F 5/10 //
(21) Anmeldenummer: 83108753.1                      (C08F220/04, 222:02),
                                                 (C08F222/02, 220:04)
(22) Anmeldetag: 06.09.83

(54) Verfahren zur Herstellung von Copolymeren aus monoethylenisch ungesättigten Mono- und Dicarbonsäuren(anhydride).

(30) Priorität: 11.09.82 DE 3233777

(43) Veröffentlichungstag der Anmeldung:
21.03.84 Patentblatt 84/12

(45) Bekanntmachung des Hinweises auf die Patenterteilung:
16.12.87 Patentblatt 87/51

(84) Benannte Vertragsstaaten:
AT BE CH DE FR GB IT LI NL SE

(56) Entgegenhaltungen:
EP-A-0 058 073
DE-A-2 936 984
FR-A-2 176 104

(73) Patentinhaber: BASF Aktiengesellschaft, Carl-Bosch-Strasse 38, D-6700 Ludwigshafen (DE)

(72) Erfinder: Denzinger, Walter, Wormser Landstrasse 65, D-6720 Speyer (DE)
Erfinder: Hartmann, Heinrich, Dr., Weinheimer Strasse 46, D-6703 Limburgerhof (DE)
Erfinder: Trieselt, Wolfgang, Dr., Alwin-Mittasch-Platz 1, D-6700 Ludwigshafen (DE)
Erfinder: Hettche, Albert, Dr., Kleiststrasse 12, D-6717 Hessheim (DE)
Erfinder: Schneider, Rolf, Dr., Feldbergstrasse 21, D-6800 Mannheim 1 (DE)
Erfinder: Raubenheimer, Hans-Juergen, Benzstrasse 6, D-6834 Ketsch (DE)

**Beschreibung**

Die Erfindung betrifft ein neues Verfahren zur Herstellung von Copolymerisaten monoethylenisch ungesättigter Mono- und Dicarbonsäure(anhydride) durch radikalische Fällungspolymerisation.

Die DE-A-22 12 623 (entspricht FR-A-2 176 104) beschreibt im Beispiel 3 die Fällungspolymerisation von Maleinsäureanhydrid und Acrylsäure-Copolymerisaten in Benzol. Nachteile von Benzol sind Cancerogenität sowie die Entstehung von hochmolekularen Produkten (geringe Übertragungskonstante des Benzols), die als Inkrustationsinhibitoren schlechter wirksam sind.

In der älteren Ammeldung DE-A-31 40 383 wird die kontinuierliche Herstellung durch Massepolymerisation bei sehr hohen Temperaturen vorgeschlagen. Nachteilig ist dabei, daß die Produkte einen niedrigen K-Wert besitzen und das Produkt als Schmelze anfällt und dadurch zur Erzielung eines feinen Pulvers eine aufwendige Mahlung erforderlich ist.

Gemäß der älteren Anmeldung DE-A-31 38 574 erhält man Produkte mit sehr guter Inkrustationswirkung. Zur Isolierung der Copolymeren in fester Form als Pulver muß jedoch die Trocknung durch aufwendige Sprühtrocknung erfolgen, denn Wasser hat eine hohe Verdampfungswärme und es ist zur Trocknung daher ein hoher Energiebedarf nötig.

Das Ziel der Erfindung bestand darin, ein Verfahren zur Herstellung von Copolymeren monoethylenisch ungesättigter Mono- und Dicarbonsäuren(anhydride) in Pulverform zu entwickeln, welche in optimaler Weise die Verwendung gestatten, wie sie in der DE-A-29 36 984, auf die hier ausdrücklich Bezug genommen wird, dargestellt wird, nämlich als Inkrustationsinhibitoren, die den Waschmitteln in Pulverform zugesetzt werden. Weiterhin können die genannten Copolymeren für die scaling inhibition verwendet werden.

Des Ziel der Erfindung wird erreicht mit einem Verfahren zur Herstellung von Copolymerisaten von einem K-Wert zwischen 8 und 80, die monoethylenisch ungesättigte Mono- und Dicerbonsäureeinheiten einpolymerisiert enthalten, durch radikallische Copolymerisation von - bezogen auf die Polymerisate -

a) 10 bis 60 Gew.-% Maleinsäure-, Citraconsäure- oder Itaconsäureanhydrid oder deren Mischungen,

b) 90 bis 40 Gew.-% Acryl-, Methacryl- oder Vinylessigsäure oder deren Mischungen und

c) 0 bis 20 Gew.-% eines sonstigen carboxylgruppenfreien mit a) und b) copolymerisierbaren monoethylenisch ungesättigten Monomeren,

wenn man die Copolymerisation als Fällungspolymerisation in einem $C_1$- bis $C_3$-alkylsubstituierten Benzolkohlenwasserstoff oder aliphatischen Halogenkohlenwasserstoff als von Benzol verschiedenem Lösungsmittel, in dem die Monomeren löslich und die Copolymerisate unlöslich sind, in Gegenwart von, jeweils bezogen auf die Monomeren, 0,05 bis 4 Gew.-% Schutzkolloiden und 2 bis 5 Gew.-% eines radikalbildenden Initiators durchführt, wobei man mindestens ein Drittel des einzusetzenden Dicarbonsäureanhydrids im Reaktor vorlegt und den Rest in höchstens zwei Dritteln der Zulaufzeit der Monocarbonsäuren von 2 bis 10 Stunden zudosiert und die Polymerisation bei 50 bis 100°C startet und bei 130 bis 180°C zu Ende führt.

Ausgangsmonomere, a) des erfindungsgemäßen Verfahrens sind monoethylenisch ungesättigte Dicarbonsäureanhydride mit 4 bis 6 C-Atomen. Geeignete Dicarbonsäureanhydride sind beispielsweise Maleinsäure-, Itaconsäure-, Glutaconsäure-, Methylenmalonsäure-, Citraconsäureanhydrid und deren Mischungen untereinander.

Ausgangsmonomere b) sind monoethylenisch ungesättigte Monocarbonsäuren. Sie besitzen 3 bis 10 C-Atome im Molekül und es seien hier vor allen Acrylsäure oder Methacrylsäure genannt; jedoch kann man aber auch Vinylessigsäure, Allylessigsäure, Propylidenessigsäure, Ethylidenpropionsäure, Dimethylacrylsäure oder $C_2$- bis $C_6$-Alkylhalbester der obengenannten Dicarbonsäuren, vor allem der Maleinsäure, einsetzen. Auch Mischungen können zugesetzt werden.

Ausgangsmonomere c), die nicht unbedingt mit einpolymerisiert werden müssen, sind carboxylgruppenfreie mit den Monomeren a) und b) copolymerisierbare Monomere, die bewirken, daß die gebildeten Copolymeren vorzugsweise in Wasser oder in verdünnten Alkalien löslich sind. Hier seien z. B. Acrylamid, Methacrylamid, (Meth)acrylnitril, Acrylamidosulfonsäure, Vinylsulfonsäure, Allylsulfonsäure, Vinylphosphonsäure, Allylphosphonsäure, Vinylacetat, Vinylpropionat, Allylalkohol, Acrolein, Hydroxyethyl- oder Hydroxypropyl(meth)acrylat, (Meth)acrylsäuremethyl- oder-ethylester, Diethylaminoethyl(meth)acrylat, $C_2$- bis $C_4$-Olefine, Alkylvinylether mit Alkylresten mit 1 bis 4 C-Atomen sowie Mischungen, genannt.

Die Monomeren a) sind im Ansatz zu 60 bis 10 %, vorzugsweise 50 bis 20 Gew.-%, die Monomere, b) zu 40 bis 90, vorzugsweise 50 bis 80 Gew.-% anwesend. Die Monomeren c) können bis zu 20 Gew.-% eingesetzt werden.

Als Lösungsmittel für die Fällungspolymerisation kommen solche in Frage, in denen die Monomeren löslich und die gebildeten Copolymeren unlöslich sind. Hierfür geeignet sind $C_1$- bis $C_2$- alkylsubstituierte Benzolkohlenwasserstoffe oder aliphatische Halogenkohlenwasserstoffe sowie Mischungen davon. Vorzugsweise seien beispielsweise genannt Toluol, p-Xylol, m-Xylol, o-Xylol sowie deren technische Gemische, Ethylbenzol, Diethylbenzol, Methylethylbenzol, Methylenchlorid, 1,1- und 1,2-Dichlorethan, 1,1,1-Trichlorethan, 1,1,2-Trichlorethylen, 1,1,2-Trichlorethan, Perchlorethylen, ,2-Dichlorpropan, Butylchlorid, 1,1,2-Trichlor-1,2,2-trifluorethan, 1,1,1,2-Tetrachlor-2,2-diflourethan und 1,1,2,2-Tetrachlor-1,2-difluorethan, wobei Xylol in Form seiner technischen Cemische, 1,1,2-Trichlorethan, 1,1,2-Trichlorethylen und die genannten Fluorchlorkohlenwasserstoffe bevorzugt sind, und Toluol von besonderem technischen Interesse ist.

Die Polymerisationskonzentrationen liegen zwischen 20 und 70 %, bevorzugt 30 und 60 %.

Bei der Durchführung der Fällungspolymerisation wird mit Vorteil, besonders wenn bei Konzentrationen von 50 % und mehr gearbeitet wird, ein Schutzkolloid zur Verhinderung der Aggregatbildung zuzusetzen. Als

2

Schutzkolloide sind polymere Stoffe geeignet, die in den Lösungsmitteln gut löslich sind, keine Reaktion mit den Monomeren eingehen und möglichst hydrophil sind. Geeignet sind beispielsweise Copolymere des Maleinsäureanhydrids mit Vinylalkylethern mit 1 bis 20 Alkyl-C-Atomen und Olefinen mit 8 bis 20 C-Atomen, sowie deren Mono-Ester mit $C_{10}$- bis $C_{20}$-Alkoho-len oder Monoamide mit $C_{10}$ - bis $C_{20}$-Alkylaminen sowie Polyalkylvinylether, deren Alkylgruppe 1 bis 20 C-Atome enthalten, wie beispielsweise Polymethyl-, Polyethyl- und Polyisobutylvinylether, die auch bevorzugt sind. Die zugesetzten Mengen an Schutzkolloid liegen üblicherweise bei 0,05 bis 4 Gew.% (berechnet auf eingesetzte Monomere), vorzugsweise 0,1 bis 2 %, wobei es oftmals besonders günstig ist, mehrere Schutzkolloide zu kombinieren.

Zur Erzielung von Copolymeren mit niedrigen Restgehalten an monomerem Dicarbonsäureanhydrid ist es zwingend notwendig, mindestens 1/3 des Dicarbonsäureanhydrids mit den Lösungsmitteln im Reaktor vorzulegen und den Rest des Dicarbonsäureanhydrids in 2/3 der Zulaufzeit der Monocarbonsäure zuzufahren. Meist ist es von Vorteil, das gesamte Dicarbonsäureanhydrid im Reaktor vorzulegen. Die Monocarbonsäure muß immer zugefahren werden, wobei Zulaufzeiten von 2 bis 10 Std., vorzugsweise 3 bis 7 Std., erforderlich sind. Das Conomere c) kann sowohl ganz als auch teilweise vorgelegt oder auch mit der Monocarbonsäure zudosiert werden.

Die Polymerisationstemperatur liegt zwischen 50 und 180°C, wobei es von Vorteil ist, bei Temperaturen von 50 bis 100°C die Hauptreaktion durchzuführen, um Copolymere mit mittlere, K-Werten zu erzielen und dann zum Auspolymerisieren die Temperaturen auf max. 180°C zu erhöhen, um niedrige Restgehalte an monomerer Dicarbonsäure zu erzielen.

Als radikalische Initiatoren sind alle Radikalspender geeignet, die bei den gewählten Temperaturen eine Halbwertszeit von <3 Std. besitzen. Wird beispielweise bei niedriger Temperatur anpolymerisiert und bei höherer Temperatur auspolymerisiert, so muß mit mindestens 2 Initiatoren gearbeitet werden. Beispielsweise sind für die genannten Polymerisationstemperaturen folgende Initiatoren geeignet:

Temp.: 50 bis 60°C:

Acetylcyclohexansulfonylperoxid, Dicetylperoxidicarbonat, Dicyclohexylperoxidicarbonat, Di-2-ethylhexylperoxidicarbonat, tert.-Butylperneodecanoat, 2,2'-Azobis-(4-methoxi-2,4-dimethylvaleronitril)

Temp.: 70 bis 80°C:

tert.-Butylperpivalat, Dioctanoylperoxid, Dilauroylperoxid, 2,2'-Azobis-(2,4-dimethylvaleronitril)

Temp.: 90 bis 100 C:

Dibenzoylperoxid, tert.-Butylper-2-ethylhexanoat, tert.-Butylpermaleinat, 2,2-Azobis-(isobutyronitril)

Temp.: 110 bis 120°C:

Bis-(tert.-butylperoxi)-cyclohexan, tert.-Butylperoxiisopropylcarbonat, tert.-Butylperacetat

Temp.: 130 bis 140°C:

2,2-Bis-(tert.-butylperoxi)-butan, Dicumylperoxid, Di-tert.-amylperoxid, Di-tert.-butylperoxid

Temp.: 150°C.

p-Menthanhydroperoxid, Pinanhydroperoxid, Cumolhydroperoxid, tert.-Butylhydroperoxid.

Durch die Mitverwendung von Redox-Coinitiatoren, wie beispielsweise Benzoin, Dimethylanilin sowie organisch lösliche Komplexe und Salze von Schwermetallen wie Kupfer, Kobalt, Mangan, Eisen, Nickel, Chrom können die Halbwertszeiten der genannten Peroxide, besonders der Hydroperoxide verringert verden, so daß beispielsweise tert.-Butylhydroperoxid in Gegenwart von 5 ppm Kupfer-II-Acetylacetonat bereits bei 100°C wirksam ist.

Für die Polymerisation geeignete Apparaturen sind übliche Rührkessel mit Anker-, Blatt-, Impeller- oder Mehrstufenimpulsgegenstromrührer. Besonders geeignet sind Apparaturen, die im Anschluß an die Polymerisation die direkte Isolierung des Festproduktes gestatten, wie z. B. Schaufeltrockner.

Die erhaltenen Polymerisatsuspensionen können direkt in Verdampfern wie beispielsweise Bandtrockner, Schaufeltrockner, Sprühtrockner und Wirbelbetttrockner getrocknet werden. Man kann aber auch durch Filtrieren oder Zentrifugieren von der Hauptmenge der Lösungsmittel abtrennen und gegebenenfalls durch Nachwaschen mit frischen Lösungsmitteln Reste von Initiator, Monomeren und Schutzkolloiden entfernen und erst dann trocknen.

Meist fallen die Copolymeren, besonders wenn in Gegenwart von Schutzkolloiden gearbeitet wird, in Form eines feinen Pulvers an, das oft den pulver- oder granulatförmigen Waschmitteln direkt als Inkrustationsinhibitor zugemischt werden kann. Oftmals ist es jedoch von Vorteil, die Copolymerisatpulver durch Mischen mit Alkalicarbonaten in Salze überzuführen und dann erst den Waschmitteln zuzumischen.

Natürlich können aus den Copolymerisatsuspensionen durch direkte Zugabe von Wasser und anschließendes Abdestillieren des Lösungsmittels mit Wasserdampf die wäßrigen Polymerisatlösungen erhalten werden, die dann je nach Bedarf mit Alkali, Aminen, Ethanolaminen oder Ammoniak neutralisiert werden können.

Die Polymerisate weisen K-Werte zwischen 8 und 80, meistens aber 10 bis 40 auf. Sie entsprechen sämtlichen Erfordernissen, wie sie für gute Inkrustationsinhibitoren in der DE-A-29 36 984 dargestellt sind.

Die folgenden Beispiele erläutern die Erfindung. Angegebene Teile sind Gewichtsteile, soweit sie nicht anders bezeichnet werden. Die K-Werte werden nach H. Fikentscher, Cellulosechemie 13, S. 60 (1932) in 2 %-igen Lösungen in Dimethylformamid bei 25°C bestimmt. Die monomere Dicarbonsäure wird auf polarographischem Wege bestimmt (s. "Polarographische Arbeitsmethoden" von Dr. Mark von Stackelberg, erschienen 1950 im Verlag Walter de Gruyter und Co., Berlin W35).

**Beispiel 1**

In einem gerührten Reaktor werden 410 Teile eines technischen Xylolgemisches, bestehend aus etwa 10 % o-Xylol, 60 % m-Xylol, 15 % p-Xylol und 15 % Ethylbenzol, 136 Teile Maleinsäureanhydrid und 1 Teil Polyethylvinylether vom K-Wert 50 unter Stickstoff auf 80°C erhitzt. Dann werden innerhalb 2 Std. 68 Teile Maleinsäureanhydrid (in flüssiger Form mit einer Temperatur von 70°C) und innerhalb 3 Std. eine Mischung von 306 Teilen wasserfreier Acrylsäure, 50 Teilen Xylolgemisch und 2,55 Teilen tert.-Butylperpivalat zudosiert, anschließend werden innerhalb 1 Std. eine Lösung von 2,55 Teilen tert.-Butylper-2-ethylhexanoat in 50 Teilen Xylolgemisch bei 90°C zudosiert und dann 5,1 Teile Di-tert.-butylperoxid zugesetzt und bei einer Temperatur von 135°C 2 Std. zum Sieden erhitzt. Nach dem Abkühlen wird die sehr dünne Suspension in einem Sprühtrockner getrocknet. Die Ausbeute beträgt 510 g eines feinen Pulvers mit einem K-Wert von 30,7 und einem Gehalt an monomerem Maleinsäureanhydrid von 0,32 %.

**Beispiel 2**

In einem gerührten Reaktor werden 136 Teile Maleineisäureanhydid, 550 Telle o-Xylol, 1 Teil Polymethylvinylether vom K-Wert 40 und 1 Teil Polyethylvinylether vom K-Wert 50 unter Stickstoff auf 100°C erhitzt und innerhalb 4 Std. eine Mischung von 204 Teilen wasserfreier Acrylsäure, 50 Teilen o-Xylol und 3,4 Teilen tert.-Butylperethylhexanoat zugefahren. Anschließend wird eine Lösung von 50 Teilen o-Xylol und 3,4 Teilen Di-tert.-amylperoxid zugesetzt, zum Sieden auf etwa 138°C erhitzt und 2 Std. nachreagieren gelassen. Die dünne Suspension wird in einem Schaufeltrockner zu einem weißen Pulver getrocknet. Die Ausbeute beträgt 338 g. Der K-Wert beträgt 21,2 und der Restgehalt an monomerem Maleinsäureanhydrid 0,14 %.

**Beispiel 3 bis 15**

In einem gerührten Reaktor werden 410 Teile Lösungsmittel (Spalte 2) sowie die in folgender Tabelle genannte Menge Schutzkolloid (Spalte 3) und Dicarbonsäureanhydrid (Spalte 4) vorgelegt und auf die in Spalte 5 angegebene Temperatur unter Stickstoff erhitzt. Nun wird die angegebene Menge Dicarbonsäureanhydrid (Spalte 6), Monocarbonsäure (Spalte 7) und Initiator (Spalte 8) gelöst in 50 Teilen Lösungsmittel zudosiert. Anschließend wird die in Spalte 9 angegebene Menge Initiator (gelöst in 50 Teilen Lösungsmittel) zugegeben, die Temperatur von Spalte 10 eingestellt und 2 Std. weiter erhitzt. Anschließend wird die Copolymerisatsuspension abzentrifugiert, mit 500 Teilen Lösungsmittel nachgewaschen und bei 70°C im Vakuumtrockenschrank bei Wasserstrahlvakuum getrocknet. Die Ausbeute an feinpulvrigen Copolymeren ist in Spalte 11, der K-Wert in Spalte 12 und der Restgehalt an monomerem Dicarbonsäureanhydrid in Spalte 13 der Tabelle zu ersehen.

Die benutzten Ahkürzungen bedeuten:

MSA:         Maleinsäureanhydrid
CSA:         Citraconsäureanhydrid
ISA:         Itaconsäureanhydrid
AS:          Acrylsäure
MAS:         Methacrylsäure
VES:         Vinylessigsäure
AM:          Acrylamid
AMPS:        2-Acrylamido-2-methylpropylsulfonsäure
VPS:         Vinylphosphonsäure
VAc:         Vinylacetat
$V_1$:       Vinylmethylether
IB:          Isobuten
HEA:         Hydroxiethylacrylat

| Spalte | 1 | 2 | 3 | | 4 | | 5 | 6 | | |
|---|---|---|---|---|---|---|---|---|---|---|
| | Beisp. Nr. | Lösungsmittel | Schutzkolloid Art | Menge [Teile] | Dicarbonsäureanhydrid Art | Menge [Teile] | Temp. [°C] | Dicarbonsäureanh.-Zulauf Menge und Art [Teile] | | Zeit [Std.] |
| | 3 | Xylol techn. Gemisch | Polythylvinyl-ether K=50 | 1 | MSA | 68 | 85 | 136 | MSA | 2 |
| | 4 | Toluol | Polymethylvinyl-ether K=40 | 1,5 | MSA | 102 | 100 | 102 | MSA | 2 |
| | 5 | Diethylbenzol | Monostearylester eines molaren MSA-Diisobuten-copolymerisates | 8 | MSA | 102 | 65 | 102 | MSA | 2 |
| | 6 | Ethylbenzol | Polymethylvinyl-ether K=40 | 2 | MSA | 68 | 85 | 136 | MSA | 4 |
| | 7 | Xylol techn. Gemisch | Copolym. aus MSA und Octadecen | 8 | CSA | 136 | 90 | 68 | MSA | 2 |
| | 8 | " | Polyethylvinyl-ether K=50 | 1 | ISA | 204 | 90 | 102 | ISA | 3 |
| | 9 | " | " | 1 | MSA | 153 | 75 | — | — | — |
| | 10 | " | " | 1 | MSA | 153 | 75 | — | — | — |
| | 11 | " | " | 1 | MSA | 204 | 90 | — | — | — |
| | 12 | " | " | 1 | MSA | 204 | 90 | — | — | — |
| | 13 | " | " | 1 | MSA | 204 | 90 | — | — | — |
| | 14 | " | " | 1 | MSA | 204 | 90 | — | — | — |
| | 15 | " | " | 1 | MSA | 204 | 90 | — | — | — |

| Spalte | 1 | 7 | | 8 | | 9 | 10 | 11 | 12 | 13 | |
|---|---|---|---|---|---|---|---|---|---|---|---|
| | Beisp. Nr. | Monocarbonsäre-Zulauf Menge und Art [Teile] | Zeit [Std.] | Initiator-Zulauf Menge und Art | Zeit | Initiator-Nachgaße Menge und art | Temp. [°C] | Ausbeute [Teile] | K-Wert | Gehalt an Dicarbons. [%] | Menge an Initiator [%] |
| | 3 | 306 AS | 3 | 5,1 Tert.butyl-perethylhexanoat | 3 | 5,1 Ditert.butyl-peroxid | 135 | 510 | 29,8 | 0,56 | 2,0 |
| | 4 | 306 AS | 3 | 20,4 Tert.butyl-perethylhexanoat | 4 | 5 Ditert.amyl-peroxid | 130 (unter Druck) | 501 | 20,8 | 1,2 | 5,0 |
| | 5 | 204 AS | 4 | 5 Tert.butyl-perpivalat | 4 | 10 Tert.butyl-hydroperoxid | 150 | 398 | 20,1 | 1,4 | 3,7 |
| | 6 | 306 AS | 7 | 5,5 Tert.butyl-peroktoat | 7 | 10 Ditert.amyl-peroxid | 135 | 506 | 25,7 | 0,7 | 3,0 |
| | 7 | 306 AS | 4 | " | 4 | 10 Ditert.butyl-peroxid | 138 | 504 | 31,8 | 0,2 | 3,0 |
| | 8 | 204 AS | 5 | " | 5 | 5 2,2-Bis(tert.-butylperoxi)butan | 138 | 510 | 42,1 | 0,3 | 2,0 |
| | 9 | 357 MAS | 4 | 10 2,2-Azobis-(2,4-dimethyl-valeronitril) | 4 | 5 Ditert.butyl-peroxid | 138 | 506 | 53,2 | 0,4 | 2,9 |
| | 10 | 357 VES | 4 | 5 Tert.butyl-perpivalat | 4 | " | 138 | 501 | 47,7 | 0,1 | 2,9 |
| | 11 | 204 AS / 102 AM | 4 | 5 Tert.butyl-perethylhexanoat | 4 | " | 138 | 503 | 38,6 | 0,7 | 2,9 |
| | 12 | 204 AS / 102 AMPS | 4 | " | 4 | " | 138 | 504 | 39,4 | 0,2 | 2,9 |
| | 13 | 204 AS / 51 VPS / 51 HEA | 4 | " | 4 | " | 138 | 503 | 27,8 | 0,5 | 2,9 |
| | 14 | 204 AS / 102 VAc | 4 | " | 4 | " | 138 | 507 | 31,4 | 0,4 | 2,4 |
| | 15 | 204 AS / 51 $V_1$ | 4 | " | 4 | " | 138 | 502 | 36,8 | 0,1 | 2,2 |

**Beispiel 16**

Anwendungstechnische Prüfung der Copolymerisate

Testgewebe aus Baumwolle wurden mit einem Testwaschmittel und Zusätzen der verschiedenen Polymerisate gewaschen. Danach wurden die Prüflinge verascht und der Grad der Inkrustierung als Prozent Aschegehalt bestimmt.

Das Testwaschmittel hatte folgende Zusammensetzung, genügt also als phosphatreduziertes Waschmittel bei entsprechender Dosierung der Stufe 1 der Phosphathöchstmengenverordnung zum deutschen Waschmittelgesetz:.

| | | |
|---|---|---|
| 7 | % | Alkylbenzolsulfonat, Na-Salz |
| 2 | % | Nonionic (Gemisch aus $C_{12}C_{14}$-Fettalkohol mit 3 Mol Ethylenoxid und $C_{16}C_{18}$-Fettalkohol mit 12 Mol Ethylenoxid) |
| 2,5 | % | Seife |
| 28 | % | Natriumperborat (Tetrahydrat) |
| 5 | % | Natriumsilikat |
| 25 | % | Natriumtripolyphosphat |
| 1,5 | % | Carboxymethylcellulose |
| 0,5 | % | optischer Aufheller |

Rest Stellmittel ($Na_2SO_4$) und Feuchtigkeit

Allgemeine Prüfbedingungen

| | |
|---|---|
| Gerät | Launder-0-meter (Fa. Atlas, Chicago, USA) |
| Temperatur | 20 min bei 40-95°C, 25 min bei 95°C |
| Waschcyclen | 20 |
| Wasserhärte | 22° d |
| Flottenverhältnis | 1 : 12,5 |
| Testgewebe | Baumwollnessel Nr. 222 und Baumwollfrottee |
| Veraschung | 2 Stunden bei 600°C |

Testergebnisse:

| Nr. | Zusatz zum Testwaschmittel | | % Asche | |
|---|---|---|---|---|
| | | | Bw 222 | Frottee |
| 16.0 | ohne Zusatz | | 5,9 | 11,4 |
| 16.1 | 2 % Polyacrylsäure (K-Wert 110) | | 3,5 | 8,0 |
| 16.2 | 2 % Copolymerisat aus Benzol (K-Wert 51) gemäß DE-A-22 12 623 | | 3,6 | 6,2 |
| 16.3 | 2 % Copolymerisat gemäß Beisp. | 1 | 1,0 | 2,4 |
| 16.4 | 2 % " | 2 | 1,1 | 2,9 |
| 16.5 | 2 % " | 3 | 1,2 | 2,5 |
| 16.6 | 2 % " | 5 | 1,4 | 3,0 |

Die erfindungsgemäßen Beispiele 16.3 bis 16.6 zeigen deutlich verbesserte Werte gegenüber den Vergleichen 16.1 bis 16.2.

**Patentansprüche**

1. Verfahren zur Herstellung von Copolymerisaten von einem K-Wert zwischen 8 und 80, die monoethylenisch ungesättigte Mono- und Dicarbonsäureeinheiten einpolymerisiert enthalten, durch radidkalische Copolymerisation von - bezogen auf die Polymerisate -

a) 10 bis 60 Gew.-% Maleinsäure-, Citraconsäure- oder Itaconsäureanhydrid oder deren Mischungen,

b) 90 bis 40 Gew.-% Acryl-, Methacryl- oder Vinylessigsäure oder deren Mischungen und

c) 0 bis 20 Gew.-% eines sonstigen carboxylgruppenfreien mit a) und b) copolymerisierbaren monoethylenisch ungesättigten Monomeren,

dadurch gekennzeichnet, daß man die Copolymerisation als Fällungspolymerisation in einer $C_1$- bis $C_3$-alkylsubstituierten Benzolkohlenwasserstoff oder aliphatischen Halogenkohlenwasserstoff als von Benzol verschiedenem Lösungsmittel, in dem die Monomeren löslich und die Copolymerisate unlöslich sind, in Gegenwart von, jeweils bezogen auf die Monomeren, 0,05 bis 4 Gew.-% Schutzkolloiden und 2 bis 5 Gew.-% eines radikalbildenden Initiators durchführt, wobei man mindestens ein Drittel des einzusetzenden Dicarbonsäureanhydrids im Reaktor vorlegt und den Rest in höchstens zwei Dritteln der Zulaufzeit der Monocarbonsäuren von 2 bis 10 Stunden zudosiert und die Polymerisation bei 50 bis 100°C startet und bei 130 bis 180°C zu Ende führt.

2. Verfahren nach Anspruch 1, <u>dadurch gekennzeichnet</u>, daß man die Polymerisation in Gegenwart von radikalbildenden Initiatoren oder Mischungen solcher Initiatoren durchführt, deren Halbwertzeit bei der gewählten Polymerisationstemperatur < 3 Stunden beträgt.

3. Verfahren nach Ansprüchen 1 und 2, <u>dadurch gekennzeichnet</u>, daß als Schutzkolloide Polymerisate von $C_1$- bis $C_{20}$-Alkylvinylethern eingesetzt werden.

## Claims

1. A process for the preparation of a copolymer, having a K value of from 8 to 80 and containing copolymerized units of monoethylenically unsaturated mono- and dicarboxylic acids, by free-radical copolymerization of

(a) from 10 to 60 % by weight of maleic anhydride, citraconic anhydride, itaconic anhydride or a mixture thereof,

(b) from 90 to 40 % by weight of acrylic acid, methacrylic acid, vinylacetic acid or a mixture thereof, and

(c) from 0 to 20 % by weight of another, carboxyl-free monoethylenically unsaturated monomer which is copolymerizable with (a) and (b), the percentages being based on the polymer, wherein the copolymerization is carried out as a precipitation polymerization in a $C_1$-$C_3$-alkyl-substituted benzene hydrocarbon or aliphatic halohydrocarbon as solvent other than benzene, in which solvent the monomers are soluble and the copolymer is insoluble, in the presence of from 0,05 to 4 % by weight of a protective colloid and from 2 to 5 % by weight of a free-radical initiator, the percentages being based in each case on the monomers, at least one third of the dicarboxylic acid anhydride to be employed being initially charged into the reactor and the remainder being metered in over not more than two thirds of the feed time of from 2 to 10 hours for the monocarboxylic acid, and the polymerization is initiated at from 50 to 100°C and completed at from 130 to 180°C.

2. A process as claimed in claim 1, wherein the polymerization is carried out in the presence of a free-radical initiator, or a mixture of such initiators, whose half life is < 3 hours at the chosen polymerization temperature.

3. A process as claimed in claims 1 and 2, wherein the protective colloid used is a polymer of a $C_1$-$C_{20}$-alkyl vinyl ether.

## Revendications

1. Procédé de préparation de copolymères avant une valeur K comprise entre 8 et 80, qui contiennent à l'état polymérisé des motifs d'acide monocarboxylique et d'acide dicarboxylique monoéthyléniquement non saturés, par copolymérisation radicalaire de -par rapport aux polymères-

al) 10 à 60 % en poids d'anhydride maléique, citraconique ou itaionique, ou de mélanges de ces anhydrides,

b) 90 à 40 % en poids d'acide acrylique, méthacrylique au vinylacétique, au de mélanges de ces acides et

c) 0 à 20 % en poids d'un autre monomère monoéthyléniquement non saturé, exempt de groupes carboxyle et copolymérisable avec a) et b),

caractérisé en ce que l'on effectue la copolymérisation sous forme de polymérisation avec précipitation, dans un hydracarbure benzénique substitué par un radical akyle en $C_1$-$C_3$, au dans un hydrocarbure halogéné aliphatique, en tant que solvant différent du benzène et dans lequel les monomères sont solubles et les copolymères sont insolubles, en présence de - par rapport aux monomères- 0,05 à 4 % en poids de colloïdes protecteurs et de 2 à 5 % en poids d'un initiateur formateur de radicaux libres, en plaçnt initialement dans le réacteur au moins un tiers de l'anhydride dicarboxylique à mettre en oeuvre, en ajoutant peu à peu le reste en un temps qui est au maximum les deux tiers du temps d'introduction des acides monocarboxyliques qui est de 2 à 10 heures, en démarrant la polymérisation à une température de 50 à 100°C et en la terminant à une température de 130 à 180°C

2. Procédé suivant la revendication 1, caractérisé en ce que l'on effectue la polymérisation en présence d'initiateurs formateurs de radicaux libres ou de mélanges de tels imitiateurs, dont la demi durée de vie à la température de polymérisation choisie est inférieure à 3 heures.

3. Procédé suivant la revendication 1 ou 2, caracterisé en ce que l'on met en oeuvre, en tant que colloïdes protecteurs, des polymères d'oxydes de vinyle et d'alkyle en $C_1$ à $C_{20}$.